# EUROPEAN PATENT APPLICATION

(11) **EP 4 752 728 A1**
(43) Date of publication of application: **03.06.2026**
(21) Application number: 24216499.4
(22) Date of filing: 29.11.2024
(51) Int. Cl.: G06F 11/07, G06F 11/34, G06F 17/40

(54) **PROCESSING OF TECHNICAL OPERATIONAL MESSAGES**

(71) Applicant: SAP SE, 69190 Walldorf (DE)
(72) Inventor: ROHDE, Lena, D-69190 Walldorf (DE); KREBS, Rouven, D-69190 Walldorf (DE); KOENIG, Steffen, D-69190 Walldorf (DE)
(74) Representative: DeltaPatents B.V.

(57) **Abstract**

Some embodiments are directed to processing of technical operational message processing in a computing platform. The method may include comparing a received technical operational messages to sets of representative technical operational messages using Retrieval Augmented Generation (RAG), and classifying a received technical operational message with the cluster associated with a matching set of representative technical operational messages, thus obtaining a sequence of cluster classifications corresponding to the received technical operational messages.

## Description

### TECHNICAL FIELD

The presently disclosed subject matter relates to a method for technical operational message processing in a computing platform, a system for technical operational message processing, a computer storage medium.

### BACKGROUND

To ensure operations on computing platforms and systems remain resilient and reliable, detecting potential issues in real-time and responding appropriately is important. Proactive monitoring and alert management systems that can assist in identifying problems often use log data as a vital source of insight. However, the intricate nature of modem computing platforms has led to a surge in log data generated by various components within the IT ecosystem, including application servers, databases, middleware, and network components. Adding to this complexity, the abstraction and decoupling between these components, both vertically and horizontally, exacerbate the issue.

Traditional methods of managing and analyzing these logs that rely on simple rule-based systems are insufficient for predicting and preventing potential operation failures. Existing ML-based solutions, on the other hand, are often limited by 1) ineffective handling of massive amounts of heterogeneous log data, 2) poor leveraging of sequential log relationships that precede errors, and 3) lack of real-time recommendations for responding proactively to potential problems.

### SUMMARY

It would be advantageous to have an improved way for processing technical operational messages on a computing platform.

In an embodiment, clusters of technical operational messages are defined by associating the cluster with a set of representative technical operational messages. For example, a cluster may represent one or more specific type of technical operational message. Technical operational messages that are received from a plurality of sources within the computing platform are classified with one of the defined clusters. For example, a received technical operational message may be replaced or tagged with a cluster identifier. Classifying a technical operational message may use Retrieval Augmented Generation (RAG). For example, a similarity score may be computed between a received technical operational message and the set of representative technical operational messages associated with a cluster. The classification of the received technical operational message with a cluster may be based on the similarity score meeting a threshold. Accordingly, a sequence of cluster classifications corresponding to the received technical operational messages is obtained.

A sequence-based prediction model may be applied to at least the sequence of cluster classifications to obtain a predicted future technical operational message cluster of a future technical operational message.

In response to a predicted future technical operational message cluster, a mitigating action may be initiated, possibly automatically.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

A further aspect of the invention is a system for processing of technical operational messages.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a computing system,
Figure 1b schematically shows an example of an embodiment of a computing system,
Figure 2a schematically shows an example of an embodiment of a system for technical message processing and error prediction,
Figure 2b schematically shows an example of an embodiment of a system for technical message processing and error prediction,
Figure 3 schematically shows an example of an embodiment of a system for defining a set of technical operational message clusters,
Figure 4 schematically shows an example of an embodiment of a method for technical operational message processing,
Figure 5a schematically shows a computer readable medium having a writable part comprising a computer program according to an embodiment,
Figure 5b schematically shows a representation of a processor system according to an embodiment.

### Reference signs list

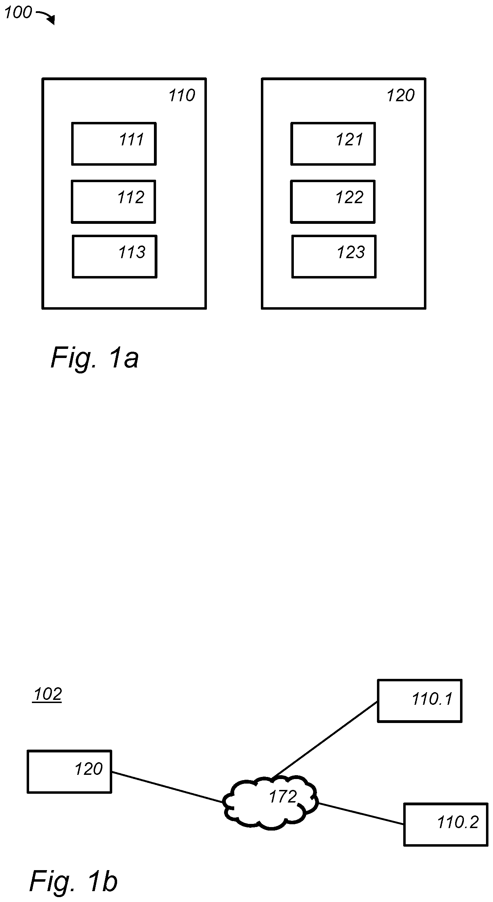

The following list of references and abbreviations corresponds to figures 1a-3, and is provided for facilitating the interpretation of the drawings and shall not be construed as limiting the claims.
- 100: a computing system
- 110: a computing platform
- 120: a technical operational message processor
- 111, 121: a processor system
- 112, 122: storage
- 113, 123: communication interface
- 172: a computer network

- 200: a system for technical message processing and error prediction

- 210-230: a source of a stream of technical operational messages
- 211-233: a technical operational message
- 249: a multiplexer
- 240: a clustering unit
- 260: a cluster prediction unit
- 270: a response unit
- 241-243: a defined cluster
- 251-253: a cluster
- 254-255: a predicted cluster
- 240.1-240.3: a clustering unit
- 300: a system for defining clusters
- 311-313: training technical operational message
- 320: a prompt
- 330: an LLM
- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of a computing platform 110 and of an embodiment of a message processor 120.

Computing platform 110 and technical operational message processor 120 may be part of a computing system 100.

Computing platform 110 may comprise one or more servers. Computing platform 110 is configured to support one or more processes. A process can refer to an instance of a service, application, or task that is part of a distributed workload across multiple servers or virtual machines. The process may be scalable and capable of running across more than one node or container. For example, a process might encompass microservices, containerized applications, or instances within a distributed system. For example, a process running on the computing platform may comprise one or more instances, services, containers, or microservices, etc. For example, the computing platform, e.g., a process running thereon, may comprise one or more virtual machines (VMs) or computing units within the cloud that run a portion of an application. For example, the computing platform, e.g., a process running thereon, may run one or more services that perform specific functions and communicate over the network. For example, the computing platform, e.g., a process running thereon, may comprise one or more containers that encapsulate individual application components and dependencies in an isolated environment.

Computing platform 110, e.g., the one or more processes running thereon, produces multiple streams of technical operational messages. For example, one source of a stream of technical operational messages may be the network stack, another may be a service, yet another may be a storage component, etc. Technical operational messages are typically log messages. Often a stream of technical operational messages is made available as a log file to which new technical operational messages are attached.

Although log messages are a motivational example for technical operational messages, they are not the only example. For example, tickets representing requests to fix bugs may be represented as technical operational messages.

Other examples of technical operational messages include: Error Reports, e.g., automated error reports, such as core dumps or application-generated error traces; Configuration Change Events, e.g., Records of system configuration changes, such as updates to firewall rules, modifications to application parameters, or scaling adjustments in cloud services, can be logged as operational messages; Service API Requests and Responses: Logs of API interactions between services serve as operational messages, capturing request and response times, error statuses, and authentication or authorization events; Access and Security Logs: Logs related to user access and security events-such as login attempts, privilege changes, firewall access records, and security alerts; Resource Allocation and Scaling Events: In cloud-based platforms, messages related to autoscaling activities, resource allocations, and deallocations; Job or Task Queue Updates: Status messages from distributed task queues, e.g., that indicate whether tasks are pending, completed, or failed, helping to monitor workflow health in batch processing or microservice architectures.

Log files will be used as the motivating example of technical operational messages, however embodiment related to log files may be adapted to other categories of technical operational messages.

Message processor 120 is configured to receive these multiple streams of technical operational messages and to assign each of them to a cluster. A cluster represents a related set of messages. A cluster may be referred to as a type, and may be implemented, e.g., by attaching a tag representing the cluster.

Clustering the technical operational messages can significantly simplify the technical operational messages, and thus be an important step before further processing. For example, the further processing may be data compressing, e.g., before storage or transmission over a network; further processing, e.g., statistical processing, AI processing, etc.

To assign a received technical operational message to a particular technical operational message cluster, the received technical operational message may be compared to a set of representative technical operational messages with which the particular cluster is associated, e.g., that represent the particular cluster.

For example, comparing the received technical operational messages to one or more sets of representative technical operational messages may use Retrieval Augmented Generation (RAG). Based on the comparison, e.g., if the comparison finds a high similarity between the received message and a cluster's set, the received message may be classified with the cluster associated with the matching set of representative technical operational messages. When this is done for multiple incoming messages, possibly coming from multiple sources, a sequence of cluster classifications is obtained that corresponds to the multiple incoming messages.

A motivating example for creating the sequence of cluster classifications is to use the sequence for predicting future cluster classifications. If the future cluster classification is one associated with an undesirable future state of the computing platform, suitable countermeasures may be taken now to prevent this.

For example, system 100 may be used for the maintenance of a computing platform, e.g., a cloud computing platform, e.g., an online database. The system may be used to prevent the computing platform from ending up in an undesirable state, e.g., crashing, stalling, or the like.

Computing platform 110 may comprise a processor system 111, a storage 112, and a communication interface 113. Message processor 120 may comprise a processor system 121, a storage 122, and a communication interface 123.

In various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power, such as a volatile memory device, e.g., Random Access Memory (RAM). For example, storage 112 and/or 122 may store data in the presence of power as well as outside the presence of power, such as a non-volatile memory device, e.g., Flash memory. Storage may comprise a volatile writable part, say a RAM, and a non-volatile writable part, e.g., Flash. Storage may comprise a non-volatile non-writable part, e.g., ROM.

Devices 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. Devices 110 and 120 may comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

Communication interface 113 may be used to send or receive digital data, e.g., technical operating messages. Communication interface 123 may be used to send or receive digital data, e.g., technical operating messages, predictions, countermeasures. Computing platform 110 and message processor 120 may have a user interface, which may include well-known elements such as one or more buttons, a keyboard, a display, a touch screen, etc. The user interface may be arranged for accommodating user interaction for performing, e.g., a prediction, a countermeasure, a monitoring, etc.

Execution of devices 110 and 120 may be implemented in a processor system. Devices 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, computing platform 110 and message processor 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, devices 110 and 120 may, in whole or in part, be implemented in programmable logic, e.g., as a field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, computing platform 110 and server 120 may comprise circuits, e.g., for cryptographic processing, and/or arithmetic processing.

In hybrid embodiments, functional units are implemented partially in hardware, e.g., as coprocessors, e.g., cryptographic coprocessors, network hardware, and partially in software stored and executed on the device.

**Figure 1b** schematically shows an example of an embodiment of a computing system 102. System 102 may comprise multiple computing platforms; shown are computing platform 110.1 and 110.2. System 100 may comprise multiple technical operational message processors, shown are 120.1 and 120.2.

The devices are connected through a computer network 172, e.g., the Internet. Computing platform 110 and message processor 120 may be according to an embodiment.

In an embodiment, a log-based error prediction is obtained, suitable for complex environments, which may comprise a three-stage approach:
1. Obtaining cluster definitions by clustering system log data, e.g., using a Large Language Model (LLM), and training a sequence-based machine learning (ML) model to predict the next cluster based on preceding cluster sequences.
2. Employing the trained models using, e.g., Retrieval Augmented Generation (RAG) to assign new log entries to one of the defined clusters and to predict the next error based on preceding log sequences during runtime.
3. Responding to the predicted cluster(s). For example, using a configurable alert and/or response system to notify administrators of potential issues based on adjustable thresholds related to, e.g., the severity or likelihood of predicted errors. This enables either manual intervention by administrators and/or automatic execution of preventive actions, such as stopping processes or modifying process parameters like adjusting timeout windows.

This approach was found to have several benefits:
- Enhanced stability and efficiency of SAP operations by predicting potential issues before they occur through effective utilization of chronological log data, allowing for timely interventions and reducing the risk of system failures.
- The adaptive alert and response system equips administrators with actionable insights in real-time, facilitating better decision-making processes. This enhances operational efficiency and reliability in complex SAP environments, leading to decreased unexpected downtime and ensuring operational continuity.

The clustering of log data using an LLM enables the system to capture and categorize recurring patterns in technical operational messages, improving the accuracy of error prediction. In practice, it turns out that similar, even highly similar, situations are nonetheless described differently in log files of different applications, e.g., in different streams. Clustering removes these artificial differences, allowing the subsequent use of sequence-based ML models to forecast possible errors more accurately.

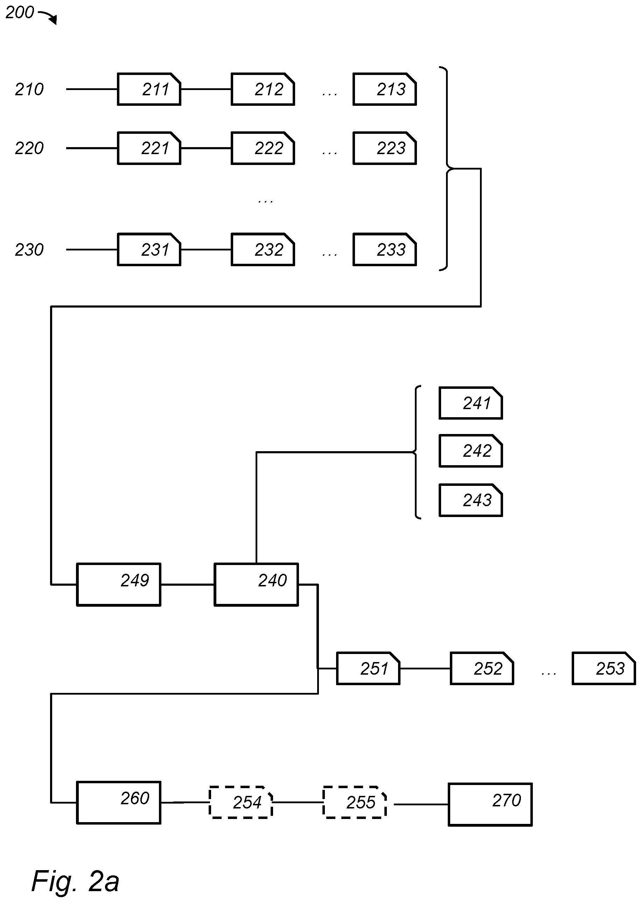

**Figure 2a** schematically shows an example of an embodiment of a system 200 for technical message processing and error prediction.

The system processes technical operational messages that are received from, e.g., generated in, a computing platform.

Shown in figure 2a are multiple streams of technical operational messages from a plurality of sources within the computing platform; shown are streams 210, 220, and 230. There may be more than three streams, or fewer than three streams, e.g., one, two, or more. Each stream comprises one or more technical operational messages that are delivered to system 200, preferably, on a real-time basis, although that is not necessary. For example, stream 210 comprises technical operational messages 211, 212, and 213; likewise for streams 220 and 230.

### Computing Platform

For example, the computing platform may be a cloud-based system. The cloud-based system may comprise diverse components such as application servers, databases, middleware, and network elements, which may interact with each other continuously, each generating substantial amounts of log data. This data is important for monitoring and management but is challenging to handle due to the highly interconnected and layered structure of the system.

Components in the computing platform may be abstracted and/or decoupled, e.g., vertically, and/or horizontally, across the architecture. This further complicates traceability and makes it hard to pinpoint issues in real-time.

Managing the operational complexities of a computing platform involves coordinating a toolchain responsible for starting, stopping, and maintaining various system components. For example, initiating the system requires a sequential process that includes starting the underlying virtual machine, initializing the application stack, and configuring the network stack along with other essential layers. Each layer-whether at the network, operating system, or application level-may encounter unique errors that are not always easily traceable due to the system's layered dependencies.

Adding to this complexity is the nature of private cloud operations, where multiple tools, such as specific platform controllers and monitoring agents, work together but interact across both vertical and horizontal layers. This multi-layered toolchain means that errors can emerge at different stages and across various components, and these issues may become obscured by the interactions within and between layers. Dependencies across network, storage, and application environments require constant monitoring and alignment to ensure stability, involving a dynamic ecosystem with interconnected, interdependent components.

A good example of such a complex process is the starting and stopping of components within a complex cloud-based system, as this involves a coordinated, multistep process that spans different layers and tools. For instance, powering up a system begins with launching the virtual machine, followed by activating the application stack, network stack, and other dependencies required for stable operation. This step-by-step activation ensures that all required components are in place before full operations can begin. Along the way, errors can arise at any point-whether due to network configuration issues, virtual machine delays, or OS-level failures-each requiring separate tools and protocols to monitor and manage. The same holds true for stopping or restarting processes, where ensuring a clean shutdown or restart across all layers is important to avoid data loss or inconsistent system states. Each tool involved, from platform controllers to network managers, works across vertical and/or horizontal planes within the architecture, adding to the complexity of issue tracking and system stability.

In one embodiment of the computing platform, specific orchestration and management tools handle key operational tasks, such as system provisioning and/or lifecycle management. For instance, a System Provisioning Controller (SPC) may be employed to automate the setup, configuration, and/or scaling of resources across the environment. SPC operates by allocating virtual machines, configuring the necessary infrastructure, and managing resources according to workload demands. For example, this component can streamline the initial setup and ongoing adjustments of virtualized resources. Due to its role in resource provisioning and infrastructure setup, SPC generates a significant amount of log data. An embodiment may be configured to process the log files generated by SPC.

In addition, a Lifecycle and Maintenance Administrator (LAMA-1) may be integrated to handle ongoing operational tasks involved in managing the health and performance of the application and network layers. LAMA-1 is responsible for starting, stopping, and maintaining various components within the platform, coordinating across multiple layers to ensure stability and efficiency. As with SPC, LAMA-1 also generates log files detailing system operations, error messages, and maintenance activities.

An embodiment of the computing platform may be configured to process log files originating from either SPC or LAMA-1, but not necessarily both.

A process running on a computing platform may involve many sub-processes, e.g., more than a hundred, each of which produces one or more log files.

For example, the subprocesses may each give rise to a stream of log messages. Log messages are an example of technical operational messages. Preferably, the technical operational messages are received as they are generated. This is desirable, as it leads to a real-time prediction of future technical operational messages. It is not necessary though to receive new technical operational messages in real-time; for example, batches of technical operational messages may be delivered, e.g., by sending a historic log file.

For example, streams 210, 220, and 230 may each be produced by a different application, an operating system, a network stack, or more generally by a subprocess of a larger process, e.g., SPC or LAMA-1, or the like. The subprocesses, sometimes referred to as tools, produce their own segregated logs. The number of sources, and thus the number of streams, may be large, e.g., from at least 100 streams, e.g., log files, to 1000, 10000, or more. In one particular embodiment, as many as 100000 logs are produced and processed. Of course, embodiments may be used for smaller systems as well, processing 2 or more or even a single stream of technical operational messages, e.g., log files.

### Log Aggregation

Many large systems do not have a system-wide log file. However, it was found that for adequate prediction on a system level, the intelligence of multiple log files, e.g., streams, may have to be combined. There are various ways to accomplish this.

One option is to include a multiplexer 249 in system 200, e.g., a log aggregator, that combines the disparate log files produced by multiple sources within the computing platform. By consolidating diverse log streams, the multiplexer simplifies data handling and allows the later clustering of log messages to proceed effectively. Aggregation of log files is also beneficial for the prediction of future clusters of log messages.

The multiplexer allows for real-time or near-real-time integration of technical operational messages, providing a cohesive view of system events. This cohesive view is particularly valuable in systems with extensive logging activities, where logs from different layers or processes, e.g., application servers, databases, network elements, etc., must be correlated to diagnose issues effectively.

Aggregation may comprise combining log streams from multiple sources to create a unified dataset before clustering. This unified dataset allows clustering depending on temporal and/or logical relationships between messages.

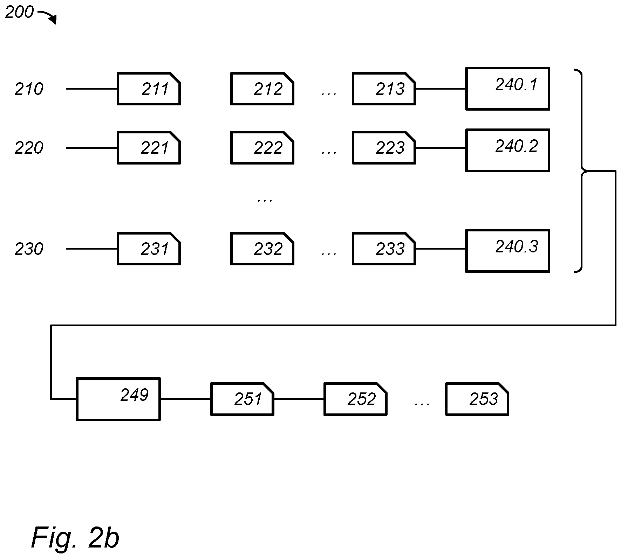

A clustering unit 240 later processes the aggregated logs, see below. It is possible to perform the aggregation later, and cluster each stream individually. **Figure 2b** schematically shows an example of a variant way to aggregate logs. In figure 2b, the streams are clustered by a dedicated clustering unit. Shown are clustering units 240.1, 240.2, and 240.3 for the streams 210, 220, and 230, respectively. This setup makes parallelizing the clustering easier, although still possible in the organization shown in figure 2a. The parallel clustering units may be identical, though they could be fine-tuned for their particular stream as well.

Intermediate forms between figures 2a and 2b are possible. For example, some streams, possibly but not all, may be aggregated into multiple streams, though fewer streams than sources, and clustered. After clustering, all clustered streams may be aggregated.

A multiplexer such as multiplexer 249 can be implemented in various ways, depending on the requirements for speed, data volume, and fault tolerance. One approach could involve a dedicated message bus architecture, such as Apache Kafka, which allows logs from multiple sources to be published and then aggregated in a centralized stream. This message bus could support high-throughput data ingestion and provide fault-tolerant storage. Another possible implementation involves a networked file system with a central node that collects logs from multiple sources, organizes them by timestamp; they may be stored in a format configured for sequential processing. This design, though simpler, would be suitable for systems where near-real-time aggregation is adequate and could be enhanced with caching mechanisms to minimize latency during high data influx.

### Clusters

System 200 defines a set of technical operational message clusters, which are used to process the technical operational messages received in the multiple streams. Each cluster represents a specific type of technical operational message, e.g., log message, and is associated with a set of representative messages. For example, system 200 may store information for each cluster that defines that cluster. System shows three cluster definitions: defined clusters 241, 242, 243. There may be more or fewer cluster definitions. Typically, a cluster is defined by its set of representative messages.

Clustering technical operational messages into specific clusters compresses the data, as a stream of cluster identifiers, e.g., tags or the like, consumes less space than the original messages themselves. This achieves more compression than conventional compression algorithms, since the compression is allowed to be lossy-that is, typically, the original technical operational message cannot be reconstructed from the cluster that it belongs to, e.g., from a cluster identifier

Use of log clustering techniques ensures efficient handling of massive heterogenous log data, making the solution adaptable across various landscapes and scalable to accommodate growing amounts of data. Furthermore, clustering abstracts the information, as messages sharing a root cause or similar technical issue can be grouped together.

A socket timeout may be referred to in a log file under a wide variety of names and phrasings. For example: "Socket timeout while connecting to host 102.102.201.201:2112", "Socket timeout while connecting to host 242.242.242.242:2222", "Client run into socket timeout when calling target server", "Connect Timeout while calling host abcd.com on Port 2025", etc. In the end however, they all relate to a situation in which one endpoint of a TCP/IP connection (the socket) does not receive expected response from the other endpoint within the configured timeout period.

For example, clusters may be created for issues such as:
Socket Timeouts
Out of Memory
User Permission Errors
Connectivity Failures

There may be other clusters, e.g., representing issues such as: Out of file handles, Process could not be started (for all kinds of reasons), Unavailability of mount point, etc.

The granularity of the clustering can be higher or lower as desired. For example, within the class of Socket Timeouts, one may further subdivide into clusters like: Network-related Socket Timeouts, Service-related Socket Timeouts, Resource-related Socket Timeouts, and so on. Likewise, Out of Memory may be further subdivided into an out of memory on the Application-level or System-level. The User Permission Errors class may be further categorized into File Access Permission Errors, Network Access Permission Errors, Database Access Permission Errors, and Service/Feature-specific Permission Errors. Finally, Connectivity Failures may include finer clusters such as Host Unreachable Failures, Protocol-specific Connectivity Failures, Firewall/Network Security-related Failures, and so on.

On the other hand, a cluster could represent multiple types of errors. For example, a cluster "Connectivity Issues during initialization" may contain types such as Socket Timeout, Connect Timeout, DNS Resolution Failure, and Network Unreachable errors, as these may all represent different manifestations of connectivity problems during system startup. These broader clusters are particularly useful when the exact error type is less important than the overall category of the issue and its impact on system operation.

Typically, each individual log message is classified by one cluster. That is the individual log messages are regarded an independent unit for pattern identification. In an embodiment however, multiple received technical operational message are classified with a single cluster. This approach may be termed hierarchical clustering. Hierarchical clustering reduces the volume of log messages, sometimes significantly. In an embodiment, the system may be switched between individual or hierarchical clustering allowing the system to flexibly meet specific use cases.

Each cluster is associated with a set of representative technical operational messages, e.g., that may be stored at system 200. For example, the representative messages may capture the type of message belonging to that cluster. It is not required that this set is exhaustive. For instance, a cluster labeled "Connectivity Issues during Initialization" may contain message types such as "Socket Timeout A," "Socket Timeout B," and "Connect Timeout," each of which addresses various connectivity problems but shares similar underlying causes.

The representative technical operational messages may be stored in their original wording, but may instead be stored in a processed format. For example, defined clusters 241-243 may each comprise the text of one or more log messages. In particular, the technical operational messages may be stored as an embedding vector, e.g., a vector in a latent space that represents at least technical operational messages, but possibly language phrases in general. The vector embeddings may be generated by a neural network, e.g., by a large language model (LLM). For example, defined clusters 241-243 may each comprise one or more embedding vectors corresponding to one or more log messages.

For example, the vector embedding may be produced by sentence transformers, e.g., using a transformer model, like BERT or RoBERTa, that has been fine-tuned for generating sentence embeddings. During training, the model learns to make similar sentences have similar embeddings while pushing dissimilar sentences apart in the embedding space. The resulting embedding vector represents the semantic content of the entire sentence in a fixed-dimensional space, usually 384 or 768 dimensions depending on the model.

Initial clustering may involve training on a subset of data, such as log files from specific system components like the System Provisioning Controller (SPC) and Lifecycle and Maintenance Administrator (LAMA-1). The resulting clusters are encoded as embeddings and stored in a vector database, allowing the system to perform efficient retrieval and similarity matching for real-time log analysis. This layered and dynamic approach to clustering thus supports efficient error prediction and provides a structured means to understand operational dynamics across a complex computing environment.

Defining the cluster may be done by hand, by selecting representative log messages and including them in the set of representative messages. The clusters, or at least an initial set of clusters may also be defined automatically. For example, a large language model may be provided with a log file and prompted to cluster a log messages into a set of training technical operational messages.

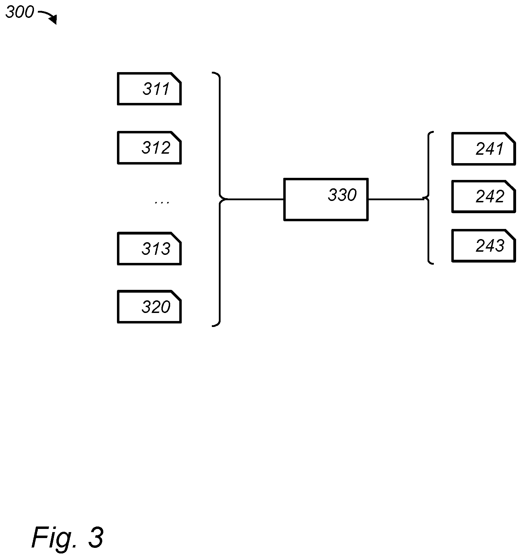

**Figure 3** schematically shows an example of an embodiment of a system 300 for defining a set of technical operational message clusters. Shown in figure 3 are a set of training technical operational messages; shown are messages 311-313. The set is provided to an LLM 330 together with a prompt 320 instructing LLM 330 to cluster the messages.

For example, prompt 320 may prompt to summarize and assign each log message to a new cluster. Each cluster acts as a comprehensive synopsis of the related log data and is subsequently encoded as an embedding stored in a vector database.

Returning to figure 2a.

Another way to define the initial set of clusters is to use vector embeddings. During training, for each new log message, a vector embedding is computed, and compared using Retrieval Augmented Generation (RAG) against existing clusters. If the log message closely matches an existing cluster, it is assigned to that cluster; otherwise, a new cluster is created. Clusters are updated, e.g., their sets of representative messages, with received and classified log messages.

A new cluster may also be generated if a log message is about equally close to two existing clusters. For example, suppose for a received message v, that sets W1 and W2 are the most similar. The distances, e.g., similarities between v and W1, e.g., d1=d(v, W1), and also with W2, e.g., d2=d(v, W2) may be computed. If d1 and d2 are close, e.g., |d1-d2| is less than a threshold, a new cluster is computed. A new cluster may also be created if d1 and d2 are too large, e.g., larger than a threshold.

Yet another way to define clusters is to compute vector embeddings for a set of training technical operational messages and derive clusters from there by applying a clustering algorithm. Suitable clustering algorithms include DBSCAN, HDBSCAN, and k-means. Prior to the clustering, an optional dimensionality reduction algorithm may be applied to preprocess the set of vector embeddings to make the clustering process more efficient and effective. The clustering algorithms would then be applied to the dimension-reduced data.

For example, one may apply dimensionality reduction algorithms to reduce the dimensionality of the embeddings, facilitating more efficient clustering. Dimensionality reduction algorithms include PCA (Principal Component Analysis), t-Stochastic Neighborhood Embedding (t-SNE), or Uniform Manifold Approximation and Projection (UMAP).

Typically, the dimensionality reduction is only used for the purpose of clustering. After clustering has been completed, a representative vector is assigned to each cluster. Typically, the representative vector has the same dimension as the original vector embeddings before dimension reduction. Choosing a representative vector may be done as described herein, e.g., by choosing a mean vector or median vector of the cluster of vector embeddings. The median vector may be the so-called geometric median or Fermat-Weber point.

In an embodiment, the following process may be used:
1. Computing vector embeddings for the set of training technical operational messages.
2. Optionally applying dimensionality reduction techniques like PCA, t-SNE, or UMAP to these embeddings.
3. Applying clustering algorithms such as k-means, DBSCAN, or HDBSCAN to the (possibly reduced-dimensional) embeddings.

As yet another alternative, the system may be started without defined clusters and rely on a cluster updating algorithm to define new clusters as needed.

### Assigning technical operational messages to a cluster

System 200 comprises a clustering unit 240. Clustering unit 240 receives a sequence of log files and classifies each one to a cluster of technical operational messages, e.g., log messages. Shown are clusters 251-253. Clustering unit 240 may be applied to an aggregate stream of technical operational messages, e.g., as shown in figure 2a, or to streams of technical operational messages before aggregation, or at least before full aggregation. In the latter cases, aggregation may take place after classification.

Clusters 251-253 may be implemented, e.g., as tags or labels that identify the cluster, e.g., cluster 251 may refer to one of cluster definitions 241-243, and likewise for clusters 252-253. Accordingly, a sequence such as
Socket timeout while connecting to host 102.102.201.201:2112
Client run into socket timeout when calling target server
OutOfMemoryError: GC overhead limit exceeded in worker thread
Process terminated due to insufficient memory: heap dump created
Socket timeout while connecting to host 242.242.242.242:2222
May be mapped to a sequence
Socket Timeouts
Socket Timeouts
Out of Memory
Out of Memory
Socket Timeouts
For example, represented as
Cluster 241
Cluster 241
Cluster 242
Cluster 242
Cluster 241

Sequence 251-253 may include additional information, e.g., a timestamp of the original message, which may help prediction; e.g., a link to the original message, which may help interpretability for a user.

Through Retrieval-Augmented Generation (RAG), the LLM compares incoming messages to existing clusters, e.g., to each of the sets of representative messages. If a message closely aligns with an existing cluster, it is categorized accordingly. RAG performs searches that consider meaning and context rather than just matching keywords, which makes this approach more adaptable to evolving log patterns or newly emerging log types.

For example, a technical operational message that has been received, e.g., in one of the multiple streams may be compared to the sets of representative technical operational messages using Retrieval Augmented Generation (RAG). To classify the received technical operational messages, one or more of the sets of messages is retrieved and then compared. If they match with each other, the received technical operational messages may be classified as the corresponding cluster. For example, the match may be expressed by determining a similarity score between the received technical operational message and the set of representative technical operational messages. In that case, classification of the received technical operational message with a cluster may be based on the similarity score meeting a threshold, e.g., reaching the threshold.

One may, for example, use an LLM to cluster using RAG. For example, if the sets of representative messages are stored as text, one could create a prompt containing: one of the sets of representative messages, a received message, and a prompt instructing the LLM to determine the degree of similarity between the received message and the representative messages. Specifically, the prompt might direct the LLM to assess whether the received message shares key attributes, terminology, or context with the representative messages within the set, allowing it to make an informed classification.

The LLM can then output a similarity score or a classification label, indicating whether the message aligns with the particular cluster associated with the representative set. This process leverages the LLM's ability to interpret textual patterns and relationships between technical messages. The similarity may be expressed as a number in a range, e.g., between 0 and 1, or between 0 and 100. The similarity may be expressed as a label, e.g., good match, medium match, poor match, etc. If no cluster meets a defined similarity threshold, the LLM may be programmed to label the message as unclassified.

To increase efficiency, more than one set of representative messages may be included in the LLM input simultaneously. In this case, the LLM may be instructed to estimate the similarity of the received message to each of these multiple representative sets, providing individual similarity scores or classification labels for each cluster. This multi-cluster approach allows the LLM to process and compare the incoming message against several clusters in a single inference step, thus reducing the number of individual queries required and enhancing processing speed.

Additionally, the LLM can be prompted to rank the clusters by similarity, either by outputting a ranked list of clusters with corresponding similarity scores or by directly assigning the message to the highest-scoring cluster. This ranking approach not only improves efficiency but also helps handle cases where a message might exhibit partial similarity to more than one cluster.

In an embodiment, all sets of representative messages are included in the LLM prompt, though this may not always be possible due to the limited input size of the LLM.

If the sets of representative messages are stored as vector embeddings, alternative methods for computing a similarity score become available. Typically, a vector embedding would be computed for the received message, using the same model that generated the representative embeddings. Vector-based comparisons may be used to compute a similarity score. For example, the vector-based comparisons may include one or more of: cosine similarity, Euclidean distance, or dot-product similarity. These metrics provide quantitative scores indicating the proximity of the received message's vector to each representative set's vector, without requiring an LLM to process full text inputs.

Using vector embeddings enables the system to handle large volumes of messages with reduced computational overhead, as the similarity computations can be performed directly on the embedding vectors rather than requiring repeated LLM inference. This approach is particularly advantageous when dealing with a high number of clusters or when operating within the LLM's input size constraints, as it bypasses the need to provide textual prompts for each cluster individually. Embedding-based similarity also allows for modular updates, where new clusters or representative messages can be added by simply generating and storing the new embeddings.

To compute the similarity between a vector *v* and a set of vectors *W* = {*w*₁, *w*₂, ..., *wₙ*} one could aggregate the similarity scores between *v* and each vector in the set. For example, one may compute the average similarity score, the maximum similarity score, etc. Alternatively, one could compute a centroid or average embedding of the set, e.g., by taking the mean of the vectors in the set, and then compute the similarity between *v* and this centroid vector.

Instead of computing a similarity score directly from the embedding vectors, the similarity score between *v* and the set *W* could use a model, such as a neural network. For example, a transformer architecture may receive vector *v* and the vectors in *W.* The sequence of vectors would be treated similarly to token embeddings in a standard transformer, allowing the self-attention mechanisms to capture relationships between the vectors. Position encodings are not needed. The output head may be configured to produce a similarity score instead of token probabilities.

Consider the following example:
We have multiple clusters including the following two:
Cluster Connectivity Initialization.
Representative log messages:
   "Socket Timeout calling host adr.com"
   "Connect Timeout when connecting to 125.125.250.10"
Cluster UserInactivity
Representative log messages:
   "User Locked out due to user interaction timeout of 120 seconds"

The following log message is received: "Socket Timeout calling host abcf.com". This message is compared to the log messages in each of the clusters, in particular the two clusters above. For example, one may receive the following scores:
- Similarity Score:
- 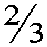 Connectivity Initialization
- ⅓ UserInactivity

As a result, the received log message is clustered as ConnectivityInitialization.

It is not necessary to compare a received technical operational message to each of the clusters. For example, if a sufficiently high match is found, the comparisons can be aborted and the received message can be assigned to the cluster with the high match.

If no match is found with sufficient confidence, the system may either assign the message to a default or miscellaneous cluster, or a new cluster may be generated. For example, the new cluster may initially only have the new unmatched received message as its set of representative messages.

By clustering logs in this manner, the system simplifies data handling and identifies patterns across disparate sources. This clustering also supports scalability, enabling the platform to adapt as the volume of log data grows. In particular, it is easy to add new log files to the system, e.g., new streams, without modifying the cluster definition at all, e.g., without modifying the set of representative messages. Even if these sets are modified, it will usually suffice to add one or two new technical operational messages from the new sources to the set of representative messages. Accordingly, despite potential increases in log files and log messages, the number of clusters can remain constant, allowing for consistent analysis over time.

### Updating clusters

If a received, and new technical operational message has been classified, it may be included in the set associated with the matched cluster. Clusters may be updated by adding new log data, which makes the matches more consistent over time and enhances the model's ability to identify log messages with higher confidence. This may be done automatically or after user approval.

Furthermore, the same techniques used to define the initial set of clusters may be used to update, refine, or add clusters. For example, if vector embeddings are used, a new cluster may be created if a technical operational message is too far, e.g., too dissimilar, from any existing cluster. For example, a new cluster may be created if clusters nearest to a received technical operational message are about equally close.

### Predicting future clusters

System 200 further comprises a cluster prediction unit 260. Cluster prediction unit 260 is configured to apply a sequence-based prediction model to at least the sequence of cluster classifications 251-253 to obtain a predicted future technical operational message cluster of a future technical operational message, e.g., 254-255. Here, two future technical operational message clusters are predicted, but more or fewer could be predicted. Also, the time in the future could be configurable, e.g., predicting technical operational message clusters 5 minutes or 30 minutes into the future.

Note that, rather than predicting the specific message text itself, this approach forecasts the cluster to which the next technical operational message will belong, based on the recent sequence of clusters. For example, continuing the example above, after the sequence of clusters: Socket Timeouts, Socket Timeouts, Out of Memory, Out of Memory, Socket Timeouts; this likely indicates a serious system degradation scenario in which connection issues may be causing memory to be consumed for retry attempts or queued operations, while memory problems may in turn be preventing the system from properly managing network connections. What might happen next is further system deterioration: more memory could be consumed by pending network operations, leading to increased Out of Memory errors, while the memory pressure could cause more connection attempts to time out. Without intervention, this could lead to complete system failure, possibly requiring a restart. It is to be expected that this scenario will be clear from the predicted clusters, e.g., 254-255, etc.

The input to the sequence-based prediction model may comprise cluster identifiers. However, in an embodiment, each cluster is represented by one or more vector embeddings. The sequence-based prediction model may then receive a sequence of these cluster representations as vector embeddings. For example, if a series of recent messages has been classified into various clusters, each with a distinct embedding, the model processes this sequence of embeddings to predict the likely classification of the next message.

For example, in an embodiment, sequential data is prepared by ordering log entries chronologically, representing each entry by its embedding or cluster identifier from prior classification steps. This sequence is then input into a machine learning model tailored for time-series data, such as a Recurrent Neural Network (RNN) or a Long Short-Term Memory network (LSTM). These models, designed to recognize patterns over sequences, utilize recent clusters to predict the next likely cluster.

The sequence-based prediction model may be trained on historic log files, etc.

The sequence-based prediction model is optional. For example, in an embodiment, the system classifies log messages but does not predict future ones. For example, the classification may be used for diagnostic and monitoring purposes. Classification helps compress and organize the massive volume of log data into meaningful patterns - for example, knowing that there are 50 "Socket Timeout" events and 30 "Out of Memory" events in the last hour gives actionable information about system state and helps identify ongoing issues.

### Response

System 200 may comprise a response unit 270. Response unit 270 may be configured to determine whether the predicted future technical operational message cluster, e.g., clusters 254-255, indicates a compromise to correct execution of a process on the computing platform. In response, response unit 270 may initiate a mitigating action. For example, the mitigating action may comprise one or more of: notifying an administrator of the predicted future technical operational message cluster, and automatically adjusting one or more operational parameters of the computing platform.

For example, mitigation actions could include:
1. Pausing processes to reduce load, avoiding a scenario where operations are forced to stop abruptly or require a full system restart.
2. Adjusting operational parameters, such as increasing request timeouts or modifying process execution timing to stabilize performance under predicted high-load conditions.
3. Initiating alternative workflows if a high likelihood of error is forecasted, thereby reducing the impact of potential failures.

Taking prompt actions, like halting operations early, can help reduce load and prevent inconsistent system states that are difficult to rectify. In practice, it is much more preferable to pause a process until a domain expert can rectify the problem than to allow the process to continue to escalate until a restart becomes inevitable. Preventing restarts is an important advantage of the system. Pausing a process can be done fully automatically. In the meantime, an administrator may be notified. For example, restarting the System Provisioning Controller (SPC) can take hours.

If the prediction indicates an error, an adaptive alert and response system notifies the administrators and enables them to take timely manual actions. In some implementations, response unit 270 could initiate predefined automated actions based on historical corrective measures stored in a database, as specified by domain experts. These measures could include rule-based responses, such as adjusting timeout settings or load management protocols that have proven effective in similar scenarios.

For example, automated actions may include: pausing or stopping a process or sub-process, modifying process parameters, e.g., increasing a timeout window, e.g., a request timeout window, repeating a task, or initiating an alternative task.

In an embodiment, system 200 is also configured to recommend specific countermeasures, drawing on historical data of operator actions taken in response to past errors. The system can analyze past outcomes, for instance, identifying if adjustments to timeout settings effectively prevented further system issues. By evaluating the effectiveness of previous responses, the system may propose the most effective countermeasure to the operator for approval or directly initiate the corrective action if permitted.

For example, in an embodiment, response unit 270 is configured to recommend or execute a countermeasure based on historical operator actions in response to previously predicted similar technical operational messages, wherein the countermeasure is determined by evaluating the effectiveness of the historical operator actions. The effectiveness of the historical actions may be determined by evaluating whether the historical operator action allowed correct execution of the process. For example, if in the historical record, e.g., historic aggregated log files, following a prediction of a particular error, e.g., out of memory, a mitigating action was taken, the mitigating action can be evaluated based on whether the process succeeded. The mitigating action may comprise adjusting one or more operational parameters of the computing platform, e.g., a timeout parameter, stopping or pausing a process, or initiating alternative tasks.

Response unit 270 is also optional. For example, an embodiment may comprise prediction unit 260 but not response unit 270. For example, an embodiment may comprise neither prediction unit 260 nor response unit 270.

### Example

The SAP Service Provider Cockpit (SPC) is a central process orchestration tool that is used to dispatch various tasks to SAP Landscape Management (SAP LaMa) and other tools like SAP TIC, which in turn automate operations on SAP systems. The general flow of these interactions and the patterns of events captured in log data can often indicate potential failures. For instance, there might be cases where SAP LaMa is unable to reach a system due to network issues. Hence, a potential (simplified) sequence of events might appear as follows:
Log Cluster ID1: [INFO] SPC: Stop system command sent
Log Cluster ID2: [WARN] LAMA: Network latency detected
Log Cluster ID3: [ERROR] SPC: Request timeout

Another example could be triggering expensive operations on SAP LaMa side:
Log Cluster ID4: [INFO] SPC: GetAllSystemNames command sent
Log Cluster ID5: [INFO] LAMA: Get System Name
Log Cluster ID5: [INFO] LAMA: Get System Name
Log Cluster ID3: [ERROR] SPC: Request timeout

Based on the predicted error cluster, the intelligent alert and response system may recommend changing SAP operation parameters in real-time, such as increasing the request timeout window, stopping, or repeating a task automatically, or initiating alternative tasks.

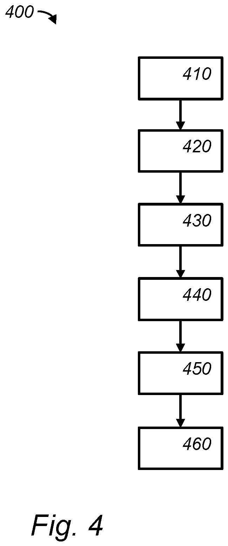

**Figure 4** schematically shows an example of an embodiment of a method 400 for technical operational message processing in a computing platform. Method 400 comprises:
- receiving (410) multiple streams of technical operational messages from a plurality of sources within the computing platform,
- defining (420) a set of technical operational message clusters, each cluster representing a specific type of technical operational message, wherein each cluster is associated with a set of representative technical operational messages,
- comparing the received technical operational messages to the sets of representative technical operational messages using Retrieval Augmented Generation (RAG), and classifying (430) a received technical operational message with the cluster associated with a matching set of representative technical operational messages, thus obtaining (440) a sequence of cluster classifications corresponding to the received technical operational messages,
- applying (450) a sequence-based prediction model at least to the sequence of cluster classifications to obtain a predicted future technical operational message cluster of a future technical operational message,
- determining (460) whether the predicted future technical operational message cluster indicates a compromise to correct execution of a process on the computing platform, and in response, initiating a mitigating action, wherein the action comprises at least one of: notifying an administrator of the predicted future technical operational message cluster, and automatically adjusting one or more operational parameters of the computing platform.

Method 400 may be used as a log-based error prediction and response method. Note steps 450 and 460 are optional.

For example, the method may be computer implemented methods. For example, accessing training data, and/or receiving input data may be done using a communication interface, e.g., an electronic interface, a network interface, a memory interface, etc. For example, storing or retrieving parameters may be done from an electronic storage, e.g., a memory, a hard drive, etc., e.g., parameters of the networks. For example, applying a neural network to data of the training data, and/or adjusting the stored parameters to train the network may be done using an electronic computing device, e.g., a computer.

A neural network may be used, e.g., to classify a message, or to transform a message into a vector embedding.

The neural networks, either during training and/or during applying may have multiple layers, which may include, e.g., attention layers, and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 400. Software may only include those steps taken by a particular sub-entity of the system. The software and/or other data according to an embodiment may be stored in a non-transitory storage medium, such as a hard disk, a floppy, a memory, an optical disc, read only memory, random access memory, CD-ROMs, magnetic tape, optical data storage devices, etc. Transitory signals and carrier waves are excluded from non-transitory media.

The software may be sent as a transitory signal along a wire, or wireless, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units, and/or parts of at least one of the systems and/or products set forth.

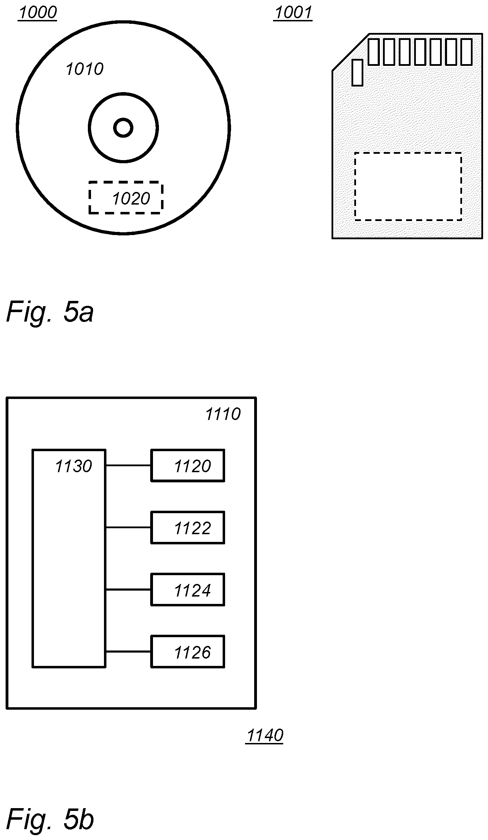

**Figure 5a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for technical operational message processing, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for technical operational message processing.

**Figure 5b** shows in a schematic representation of a processor system 1140 according to an embodiment. The processor system comprises one or more integrated circuits 1110. The architecture of the one or more integrated circuits 1110 is schematically shown in Figure 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., a device for technical operational message processing may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A method (400) for technical operational message processing in a computing platform, comprising:
- receiving (410) multiple streams of technical operational messages from a plurality of sources within the computing platform,
- defining (420) a set of technical operational message clusters, wherein each cluster is associated with a set of representative technical operational messages,
- comparing the received technical operational messages to the sets of representative technical operational messages using Retrieval Augmented Generation (RAG), and classifying (430) a received technical operational message with the cluster associated with a matching set of representative technical operational messages, thus obtaining (440) a sequence of cluster classifications corresponding to the received technical operational messages.

2. The method of Claim 1, comprising
- applying (450) a sequence-based prediction model at least to the sequence of cluster classifications to obtain a predicted future technical operational message cluster of a future technical operational message,
- determining (460) whether the predicted future technical operational message cluster indicates a compromise to correct execution of a process on the computing platform, and in response, initiating a mitigating action, wherein the action comprises at least one of: notifying an administrator of the predicted future technical operational message cluster, and automatically adjusting one or more operational parameters of the computing platform.

3. The method of any one of the preceding claims, wherein the comparison of the received technical operational message to the set of representative technical operational messages comprises determining a similarity score between the received technical operational message and the set of representative technical operational messages, and wherein the classification of the received technical operational message with a cluster is based on the similarity score meeting a threshold.

4. The method of any one of the preceding claims, further comprising creating a new cluster in response to determining that the received technical operational message does not match any of the defined clusters, wherein the new cluster is associated with the received technical operational message as its representative technical operational message.

5. The method of any one of the claims 3-4, comprising creating a new cluster in response to determining that the similarity score between the received technical operational message and the two most similar clusters is within a predefined range, wherein the new cluster is associated with the received technical operational message as its representative technical operational message.

6. The method according to any one of the preceding claims, wherein
- the classification of the received technical operational message with a cluster comprises representing each cluster as a vector embedding, and/or
- the sequence-based prediction model receiving a sequence of cluster classifications in the form of a sequence of vector embeddings.

7. The method of any one of the preceding claims, wherein the comparison of the received technical operational messages to the set of representative technical operational messages using Retrieval Augmented Generation (RAG) comprises generating a prompt that includes the text of the received technical operational message, the texts of the set of representative technical operational messages of a cluster, and an instruction to grade the similarity between the received technical operational message and the set of representative technical operational messages, and providing the prompt to a large language model (LLM) to obtain the similarity score.

8. The method of any one of the preceding claims, wherein the comparison of the received technical operational messages to the set of representative technical operational messages comprises generating vector embeddings for each of the representative technical operational messages and for the received technical operational message, and determining the similarity score by comparing the vector embedding of the received technical operational message to the vector embeddings of the representative technical operational messages using a model.

9. The method of any one of the preceding claims, wherein the set of technical operational message clusters is generated using a large language model (LLM) prompted to cluster a set of training technical operational messages.

10. The method of claim 2, and optionally any one of the preceding claims, wherein automatically adjusting one or more operational parameters of the computing platform comprises one or more of:
- pausing or stopping a process or sub-process,
- modifying process parameters, e.g., increasing a timeout window, e.g., a request timeout window,
- repeating a task,
- initiating an alternative task.

11. The method of claim 2, and optionally any of the preceding claims, further comprising recommending a countermeasure based on historical operator actions in response to previously predicted similar technical operational messages, wherein the countermeasure is determined by evaluating the effectiveness of the historical operator actions.

12. The method of Claim 11, wherein the effectiveness of the historical actions is determined by evaluating whether the historical operator action allowed correct execution of the process.

13. The method of Claim 2, and optionally any one of the preceding claims, wherein the mitigating action comprises proposing for approval the adjusting of one or more operational parameters of the computing platform, stopping a process, or initiating alternative tasks.

14. A system comprising: one or more processors; and one or more storage devices storing instructions that, when executed by the one or more processors, cause the one or more processors to perform operations for a method according to any one of the preceding claims.

15. A transitory or non-transitory computer storage medium encoded with instructions that, when executed by one or more computers, cause the one or more computers to perform the method according to any one of claims 1 to 13.
